# EUROPEAN PATENT APPLICATION

(11) **EP 4 790 568 A1**
(43) Date of publication of application: **12.08.2026**
(21) Application number: 26156835.6
(22) Date of filing: 06.02.2026
(51) Int. Cl.: G06F 16/25

(54) **INFORMATION PROCESSING APPARATUS, INFORMATION PROCESSING METHOD, AND COMPUTER PROGRAM PRODUCT**

(30) Priority: 10.02.2025 JP 2025019968
(71) Applicant: KABUSHIKI KAISHA TOSHIBA, Kawasaki-shi, Kanagawa 212-0013 (JP)
(72) Inventor: YAMASHITA, Lan, Kawasaki-shi, Kanagawa (JP); YAMADA, Masataka, Kawasaki-shi, Kanagawa (JP); IWAMASA, Mikito, Kawasaki-shi, Kanagawa (JP); SUNAGAWA, Eiichi, Kawasaki-shi, Kanagawa (JP); FUJIWARA, Koji, Kawasaki-shi, Kanagawa (JP)
(74) Representative: Hoffmann Eitle

(57) **Abstract**

An information processing apparatus (100) includes a processing unit. The processing unit generates a first transformation rule for transforming, for each of one or more first properties among one or more properties included in a first data model, the first property into a second property among one or more properties included in a second data model based on a semantic similarity between the properties included in the first data model and the properties included in the second data model. The processing unit generates a second transformation rule for transforming, for each of the one or more first properties, a first element including a definition of the first property among elements included in a first metamodel of the first data model into a second element including a definition of the second property among elements included in a second metamodel of the second data model.

## Description

### FIELD

Arrangements described herein relate to an information processing apparatus, an information processing method, and a computer program product.

### BACKGROUND

It may be required to transform one format of data into another format of data. For example, it may be required to transform existing system data into data of a digital product passport (DPP) and output the data as a standard format to an external system.

### BRIEF DESCRIPTION OF THE DRAWINGS

Fig. 1 is a block diagram of a configuration of an information processing apparatus according to an arrangement;
Fig. 2 is a diagram illustrating a relationship between a data model and a metamodel;
Fig. 3 is a flowchart of a generation process according to the arrangement;
Fig. 4 is a diagram illustrating an example of a data model;
Fig. 5 is a diagram for describing a generation example of a transformation rule;
Fig. 6 is a diagram illustrating an example of a transformation rule;
Fig. 7 is a diagram illustrating an example of a transformation rule;
Fig. 8 is a diagram illustrating an example of a transformation rule;
Fig. 9 is a diagram for describing an example of a determination process;
Fig. 10 is a flowchart of a complementation rule generation process; and
Fig. 11 is a hardware configuration diagram of the information processing apparatus according to the arrangement.

### DETAILED DESCRIPTION

Hereinafter, a preferred arrangement of an information processing apparatus according to the present invention will be described in detail with reference to the accompanying drawings.

As described above, it may be required to transform data in one format into data in another format. Hereinafter, a case where data of an existing system conforming to the OpenAPI data model is transformed into data of DPP conforming to an asset administration shell (AAS) data model will be described as an example.

The data of the existing system according to the OpenAPI data model is, for example, data about each battery unit included in a battery system. Data of a transformation source is not limited to data conforming to the OpenAPI data model, and may be data in any format. Similarly, data of a transformation destination is not limited to data conforming to the AAS data model, and may be data in any format.

In order to transform data conforming to the OpenAPI data model into data conforming to the AAS data model, for example, the following methods may be applied.
(TM1) A transformation rule is generated by using a data transformation language (DTL), and transformation between pieces of data is performed by using the transformation rule.
(TM2) A transformation rule between properties (schema) using semantically similar terms is generated by using a large language model (LLM), and transformation between pieces of data is performed by using the transformation rule.

In the method TM1, it is necessary to manually generate a transformation rule between data models DMA and DMB by using the two data models DMA and DMB that are data transform targets, and a load for development is large. In the method TM2, there is a case where an appropriate transformation rule cannot be generated for two data models having greatly different hierarchical structure or property terms, for example.

The information processing apparatus according to the arrangement generates a transformation rule that realizes the mutual transformation of data of the data model DMA (first data model) and the data model DMB (second data model) different from each other with higher accuracy. First, a transformation rule TRA (first transformation rule) based on semantic similarity is generated. Next, a transformation rule TRB (second transformation rule) between a metamodel MMA (first metamodel) of the data model DMA and a metamodel MMB (second metamodel) of the data model DMB is generated by using information regarding a property for which the transformation rule TRA is generated.

In a case where the transformation rule TRB is generated, not all elements of the metamodel but elements related to the property for which the transformation rule TRA is generated are considered. That is, elements that are generation targets are limited. As a result, for example, it is possible to generate the transformation rule TRB with higher accuracy compared with the method of generating a transformation rule for all the elements of the metamodel.

Furthermore, in the present arrangement, hierarchical structures of the data model DMA and the data model DMB are detected, and a transformation rule TRC (third transformation rule) between the hierarchical structures is generated. The generated transformation rule TRB and transformation rule TRC are applied to the LLM as constraint conditions, and a transformation rule TRD (fourth transformation rule) is generated by the LLM. As a result, it is possible to generate, as a transformation rule between the same metamodel elements, a transformation rule between the properties of the data model DMA and the properties of the data model DMB having the same hierarchical structure. Since a range of transformation can be narrowed by the elements (entities) and the constraint conditions of the hierarchical structures, generation of a transformation rule between erroneous elements can be avoided (prevention of noise), and generation accuracy of the transformation rule can be improved.

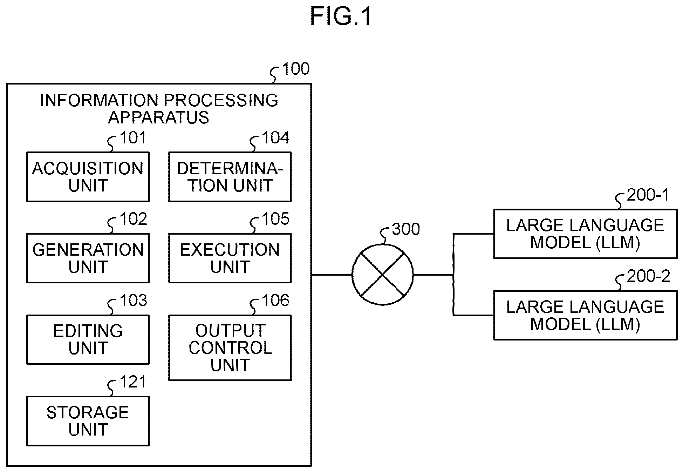

Fig. 1 is a block diagram illustrating an example of a configuration of an information processing apparatus 100 according to an arrangement. As illustrated in Fig. 1, the information processing apparatus 100 is connected to LLMs 200-1 and 200-2 via a network 300.

The network 300 may be a network of any form, and may be configured by, for example, the Internet. The network 300 may be any of a wired network, a wireless network, and a network in which a wired network and a wireless network are mixed.

The LLMs 200-1 and 200-2 may be simply referred to as LLM 200 when there is no need to distinguish. The LLM 200 is a device that generates and outputs a response in accordance with an instruction (prompt) input from an external apparatus such as the information processing apparatus 100. The LLM 200 may be realized by any method used conventionally. The number of LLMs 200 is not limited to two, and may be one or three or more. Some or all of the one or more LLMs may be provided in the information processing apparatus 100.

The information processing apparatus 100 includes an acquisition unit 101, a generation unit 102, an editing unit 103, a determination unit 104, an execution unit 105, an output control unit 106, and a storage unit 121.

The acquisition unit 101 acquires various types of information used in the information processing apparatus 100. A method of acquiring information by using the acquisition unit 101 may be any method, and for example, a method of receiving information from an external device via the network 300, or a method of reading information from a storage medium can be applied.

For example, acquisition unit 101 acquires the following information used for generating a transformation rule.
·Data of a transformation source: the metamodel MMA, the data model DMA, sample data, or the like
·Data of a transformation destination: the metamodel MMB, the data model DMB, or the like

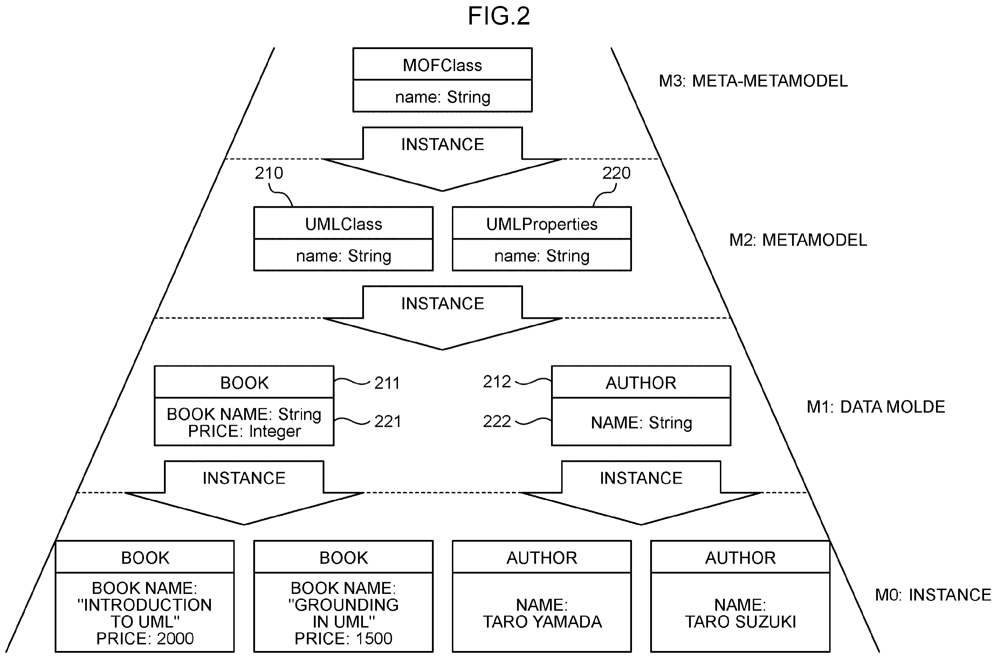

Here, a structure of a data model and a relationship between a data model and a metamodel will be described with reference to Fig. 2. Fig. 2 illustrates a relationship with an instance M0 and a meta-metamodel M3 in addition to a data model M1 and a metamodel M2.

The data model M1 includes a class defining a hierarchical relationship and a property defining the class. Each property is described by using a set of attributes (for example, an identifier, a data type, or a unit to be used). The metamodel M2 is a model corresponding to an upper level of the data model M1, and is, for example, a model that defines a data description method (a data structure, a relationship, a format, a form, and the like). The meta-metamodel M3 is a model corresponding to an upper level of the metamodel M2. The instance M0 corresponds to data (specific setting value) of a property (data item) defined by the data model M1.

The data model M1 includes a class and a property. Fig. 2 illustrates an example of the data model M1 including a class 211 representing "book" and a class 212 representing "author". Although not illustrated in Fig. 2, the data model M1 may include a plurality of classes having a hierarchical structure. For example, the class 212 may be defined as a class in a lower hierarchy of the class 211.

The class 211 of "book" is associated with "book name" and "price" as the properties 221 belonging to the class 211. The class 212 of "author" is associated with "name" as the property 222 belonging to the class 212.

The metamodel M2 includes an element 210 defining a class description method and an element 220 defining a property description method.

The acquisition unit 101 also acquires information (correspondence information) indicating how the data model M1 and the metamodel M2 correspond to each other. By using the correspondence information, it is possible to specify a hierarchy and elements of the metamodel MMA that defines the elements included in the data model M1. The correspondence information may be included in the data model M1, for example. For example, the acquisition unit 101 may acquire the data model DMA including the correspondence information with the metamodel MMA and the data model DMB including the correspondence information with the metamodel MMB. As an example, the class 211 can be configured such that the "book" class 211 of the data model M1 includes information indicating that an element of the metamodel M2 used by "book" is "UML Class".

The description returns to Fig. 1. The generation unit 102 generates the following transformation rules.
·Transformation rules between data model DMA and data model DMB: transformation rule TRA, transformation rule TRD
·Transformation rule between metamodel MMA and metamodel MMB: transformation rule TRB
·Transformation rule between hierarchical structures of data model DMA and data model DMB: transformation rule TRC

The data model DMA and the data model DMB each include a plurality of classes having a hierarchical structure and one or more properties belonging to any one of the plurality of classes, and correspond to two models different from each other.

For example, the generation unit 102 generates the transformation rule TRA on the basis of the semantic similarity between the property included in the data model DMA and the property included in the data model DMB. The transformation rule TRA is a rule for transforming each of one or more properties PA (first property) among one or more properties included in the data model DMA into a property PB (second property) among one or more properties included in the data model.

For example, similarly to the method TM2, the generation unit 102 generates the transformation rule TRA by using the LLM 200 (which may be either of LLMs 200-1 and 200-2). The generation unit 102 inputs a prompt including, for example, the data model DMA and the data model DMB and giving an instruction for generating a transformation rule between properties of these data models to the LLM 200, thereby generating the transformation rule TRA. The generation unit 102 may use a prompt further including sample data. As a result, the accuracy of generation of the transformation rule TRA can be improved.

The LLM 200 does not necessarily generate the transformation rule TRA for all of one or more properties included in the data model DMA. That is, the property PA may be any of one or more properties included in the data model DMA. Similarly, the property PB may be any of one or more properties included in the data model DMB.

Next, the generation unit 102 generates a transformation rule TRB for each of one or more properties PA. The transformation rule TRB is a rule for transforming an element EA (first element) including the definition of the property PA among the elements included in the metamodel MMA into an element EB (second element) including the definition of the property PB among the elements included in the metamodel MMB.

For example, the generation unit 102 generates the transformation role TRB with reference to the metamodel MMA and the metamodel MMB for each of one or more properties PA included in the generated transformation rule TRA.

Next, the generation unit 102 generates the transformation rule TRC for each of one or more properties PA. The transformation rule TRC is a rule for transforming a hierarchical structure from the class to which the property PA belongs to a root class (its ancestor classes until the root class) into a hierarchical structure from the class to which the property PB belongs to a root class (its ancestor classes until the root class).

Next, the generation unit 102 generates the transformation rule TRD with the transformation rule TRB and the transformation rule TRC as constraints for each of the one or more properties PA. The transformation rule TRD is a rule for transforming one or more properties PC (third property) among one or more properties included in the data model DMA into a property PD (fourth property) among one or more properties included in the data model DMB.

For example, the generation unit 102 generates a prompt for giving an instruction for generating the transformation rule TRD with the transformation rule TRB and the transformation rule TRC as constraints, and generates the transformation rule TRD by inputting the generated prompt to the LLM 200 (which may be either of LLMs 200-1 and 200-2).

The generation unit 102 may generate the transformation rule TRD in which the reliability (score) is associated with each of the one or more properties PA. The reliability indicates that a transformation rule is more reliable as a value thereof becomes larger, for example. For example, the generation unit 102 generates the transformation rule TRD associated with the reliability by using a prompt for giving an instruction for generating the transformation rule TRD associated with the reliability.

The editing unit 103 edits the transformation rule, for example, in response to an instruction from a user. For example, the transformation rule TRA generated by the LLM 200 may be an inappropriate transformation rule. In such a case, the editing unit 103 is used as a function for correcting the transformation rule TRA. For example, a display screen for checking and editing the generated transformation rule TRA is displayed on a display device by the output control unit 106 or the like. The display device may be provided in the information processing apparatus 100 or may be provided outside the information processing apparatus 100. The editing unit 103 edits (corrects) the transformation rule TRA in response to the user's instruction via the display screen.

The determination unit 104 determines a transformation rule TRD to be finally adopted (recommended) from the generated one or more transformation rules TRD. For example, in a case where the transformation rule TRD associated with the reliability is obtained, the determination unit 104 determines the transformation rule TRD having the reliability higher than that of the other transformation rules TRD among the one or more transformation rules TRD.

Since the transformation rule TRD is generated for each of one or more properties PA, the same transformation rule TRD may be generated a plurality of times by the same LLM or different LLMs. Therefore, the determination unit 104 may determine a transformation rule TRD of which the generation number is greater than that of the other transformation rules TRD among the generated one or more transformation rules TRD. That is, the determination unit 104 may determine the transformation rule TRD by a voting method based on the generation number thereof.

The execution unit 105 executes a data transformation process using the transformation rule. For example, the execution unit 105 executes a transformation process of transforming data of one or more properties included in the data model DMA into data of one or more properties included in the data model DMB by using the generated transformation rule TRB or transformation rule TRD. In addition, the execution unit 105 stores an error message in a case where an execution error occurs, and causes the generation unit 102 to generate a prompt (correction information) for correcting the error. The execution unit 105 corrects the transformation rule used in the transformation process by inputting the generated prompt to the LLM 200, for example.

For example, one or more transformation rules TRD and data (the instance in the example in Fig. 2) according to the data model that is a transformation source are input to the execution unit 105. The execution unit 105 transforms the input data according to the input transformation rule TRD, and outputs the transformed data as data according to the data model that is a transformation destination.

The output control unit 106 controls output of various types of information used in the information processing apparatus 100. For example, the output control unit 106 outputs the transformation rule TRD determined by the determination unit 104. An information output method may be any method, and for example, a method of displaying on a display device, a method of transmitting information to an external device via the network 300, and the like can be applied.

At least some of the above units (the acquisition unit 101, the generation unit 102, the editing unit 103, the determination unit 104, the execution unit 105, and the output control unit 106) may be realized by one or more processing units. Each of the above units is realized by, for example, one or a plurality of processors. For example, each of the above units may be realized by causing processors such as a central processing unit (CPU) and a graphics processing unit (GPU) to execute a program, that is, by software. Each of the above units may be realized by a processor such as a dedicated integrated circuit (IC), that is, by hardware. Each of the above units may be realized by using software and hardware in combination. In a case where a plurality of processors are used, each processor may realize one of the units or two or more of the units.

The storage unit 121 stores various types of information used in the information processing apparatus. For example, the storage unit 121 stores the information acquired by the acquisition unit 101 and a processing result (generated transformation rule or the like) by each unit.

Note that the storage unit 121 may be configured by any of commonly used storage media such as a flash memory, a memory card, a random access memory (RAM), a hard disk drive (HDD), and an optical disc.

The information processing apparatus 100 may be physically configured by one apparatus or may be physically configured by a plurality of apparatuses. For example, the information processing apparatus 100 may be constructed on a cloud environment. Furthermore, each unit in the information processing apparatus 100 may be provided in a plurality of apparatuses in a distributed manner.

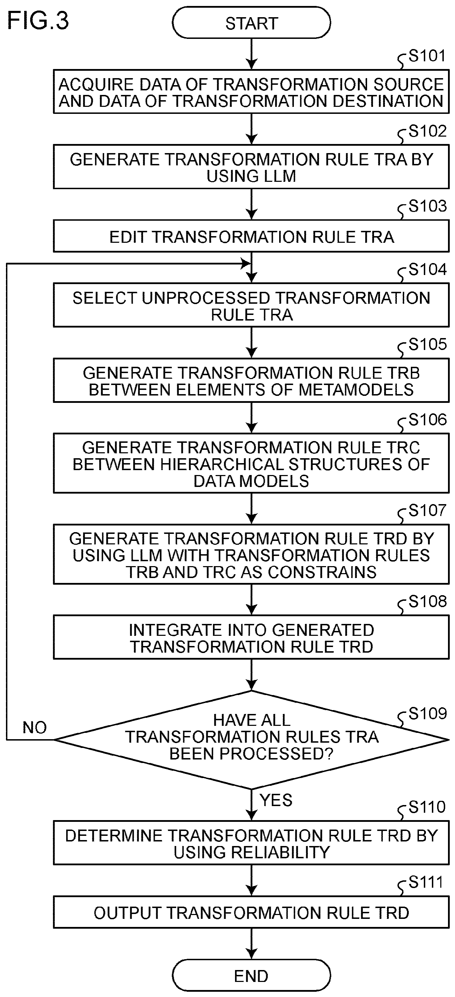

Next, a transformation rule generation process using the information processing apparatus 100 according to the arrangement will be described. Fig. 3 is a flowchart illustrating an example of a generation process according to the arrangement;

The acquisition unit 101 acquires data of a transformation source (the metamodel MMA, the data model DMA, and the sample data) and data of a transformation destination (the metamodel MMB and the data model DMB) (step S101).

The generation unit 102 generates the transformation rule TRA by using the LLM 200 (step S102). The LLM 200 used for generation may be a preset LLM 200 or may be the LLM 200 designated by a user or the like.

The editing unit 103 edits the transformation rule TRA according to an instruction from the user or the like as necessary (step S103).

Thereafter, a process of generating the transformation rule TRD is repeatedly executed for each of the generated (edited) transformation rules TRA (steps S104 to S109).

The generation unit 102 selects an unprocessed transformation rule TRA among the generated one or more transformation rules TRA (step S104). Each transformation rule TRA is information in which one property PA and one property PB are associated with each other.

The generation unit 102 generates the transformation rule TRB between a set of elements of the metamodel MMA that defines the property PA included in the selected transformation rule TRA and a set of elements of the metamodel MMB that defines the property PB included in the selected transformation rule TRA (step S105).

The generation unit 102 generates the transformation rule TRC between a hierarchical structure including the property PA in the hierarchical structure of the class included in the data model DMA and a hierarchical structure including the property PB in the hierarchical structure of the class included in the data model DMB (step S106).

The generation unit 102 uses the LLM 200 to generate the transformation rule TRD with the transformation rule TRB and the transformation rule TRC as constraints (step S107). The LLM 200 used for generation may be a preset LLM 200 or may be the LLM 200 designated by a user or the like. The generation unit 102 may generate a plurality of transformation rules TRD by using a plurality of LLMs 200 for one selected transformation rule TRA. The generated transformation rule TRD may be edited by the editing unit 103 as in step S103.

The generation unit 102 integrates the generated transformation rule TRD into the transformation rule TRD already generated (step S108). For example, the generation unit 102 adds the transformation rule TRD generated in step S107 to a set (a list or the like) of the generated transformation rules TRD.

The generation unit 102 determines whether or not all the transformation rules TRA have been processed (step S109). In a case where not all the transformation rules TRA have been processed (step S109: No), the generation unit 102 returns to step S104 and repeats the process on the next unprocessed transformation rule TRA.

In a case where all the transformation rules TRA have been processed (step S109: Yes), the determination unit 104 determines the transformation rule TRD to be adopted by using the reliability (step S110). The output control unit 106 outputs the determined transformation rule TRD (step S111), and ends the generation process. Furthermore, the output transformation rule TRD may be edited by the editing unit 103.

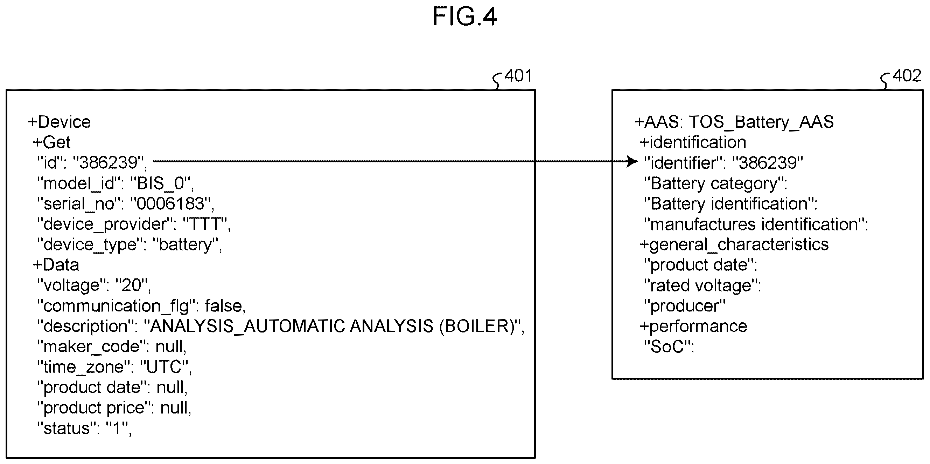

Next, a specific example of the transformation rule generation process will be described. Fig. 4 is a diagram illustrating an example of the data model DMA and the data model DMB for which transformation rules are generated.

A data model 401 is an example of the data model DMA that is a transformation source. The data model 401 is illustrated as an example of the OpenAPI data model. A data model 402 is an example of the data model DMB that is a transformation destination. The data model 402 is illustrated as an example of an AAS data model.

For example, the data model 401 includes a hierarchical structure having a "Get" class and a "Data" class in a lower hierarchy of the "Device" class. For example, the "Get" class includes five properties including "id". The data model 402 includes a hierarchical structure having an "identification" class, a "general_characteristics" class, and a "performance" class in a lower hierarchy of the "AAS" class. For example, the "identification" class includes four properties including "identifier". Note that, although an example of a setting value is illustrated next to each property, these setting values need not be included in the data model.

For example, the generation unit 102 generates the transformation rule TRA by inputting a prompt for giving an instruction for generating a transformation rule between an element included in the data model 401 that is a transformation source and an element included in the data model 402 that is a transformation destination to the LLM 200 (step S102 in Fig. 3).

The LLM 200 generates the transformation rule TRA on the basis of the semantic similarity between the elements. In Fig. 4, for example, the transformation rule TRA for transforming the element "id" included in the data model 401 into the element "identifier" included in the data model 402 is generated. The generated transformation rule TRA is not limited thereto. For example, the following inter-element transformation rule TRA may be generated. The left of the arrow represents the element of the data model 401 that is the transformation source, and the right of the arrow represents the element of the data model 402 that is the transformation destination. Which transformation rule TRA is generated depends on, for example, the implementation of the LLM 200.
"serial_no"->"Battery identification"
"device_provider"->"manufactures identification"

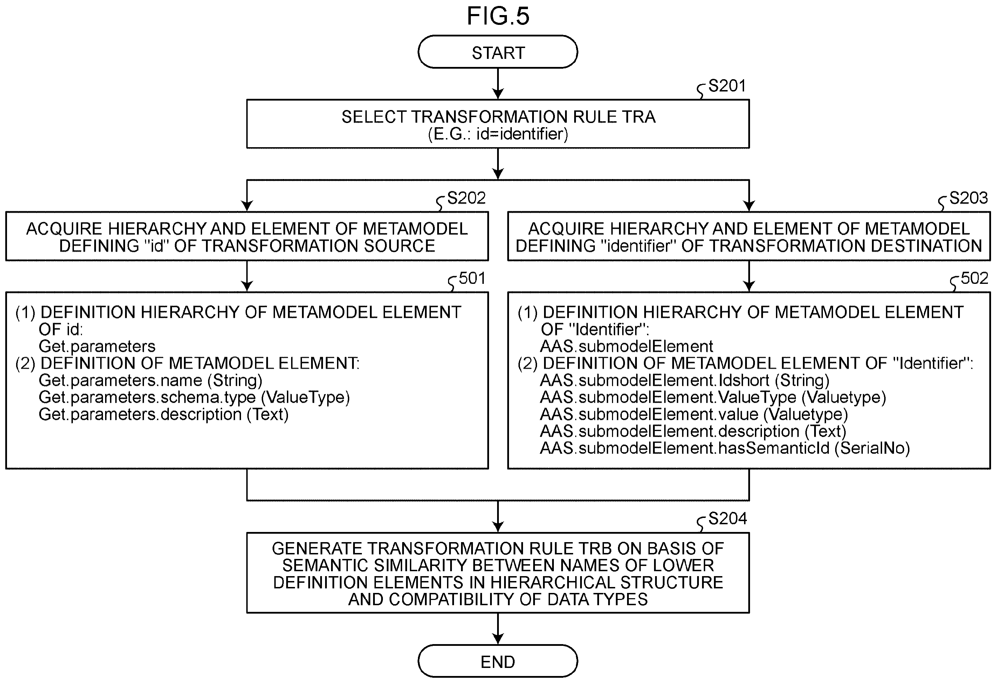

The generation unit 102 generates the transformation rule TRB by using the transformation rule TRA generated as described above. Hereinafter, a case of the transformation rule TRA for transforming "id" into "identifier" will be described as an example. Fig. 5 is a diagram for describing a specific example of generation of the transformation rule TRB.

The generation unit 102 selects one transformation rule TRA (step S201). This process corresponds to step S104 in Fig. 3. It is assumed that the transformation rule TRA for transforming "id" into "identifier" is selected.

The generation unit 102 acquires data 501 including a hierarchy and elements of the metamodel MMA defining the element "id" of the transformation source among the elements included in the transformation rule TRA (step S202). The generation unit 102 refers to the correspondence information between the data model DMA and the metamodel MMA, thereby specifying the hierarchy and elements of the metamodel MMA defining the element "id" of the transformation source.

Fig. 5 illustrates an example in which the generation unit 102 acquires "Get.parameters" as the hierarchy of the metamodel MMA defining the element "id". In addition, an example is illustrated in which three elements "Get.parameters.name", "Get.parameters.schema.type", and "Get.parameters.description" are acquired as the elements (elements EA) of the metamodel MMA defining the element "id". Note that text (String, ValueType, Text, SerialNo, and the like) in parentheses indicates a data type of each element.

Similarly, the generation unit 102 acquires data 502 including a hierarchy and elements of the metamodel MMB defining the element "identifier" of the transformation destination among the elements included in the transformation rule TRB (step S203).

Fig. 5 illustrates an example in which the generation unit 102 acquires "submodelElement" as the hierarchy of the metamodel MMB defining the element "identifier". In addition, an example is illustrated in which five elements are acquired as the elements (elements EB) of the metamodel MMB defining the element "identifier".

The generation unit 102 generates the transformation rule TRB in consideration of the semantic similarity between the names of the lower definition elements in the hierarchical structure, the compatibility of the data types, and the like (step S204). In the example in Fig. 5, since the data type is common to "String", the generation unit 102 generates the transformation rule TRB for transforming "Get.parameters.name" into "AAS.submodelElement.Idshort". Furthermore, in consideration of the semantic similarity of the names and the data type, the generation unit 102 generates the transformation rule TRB for transforming "Get.parameters.schema.type" into "AAS.submodelElement.ValueType" and the transformation rule TRB for transforming "Get.parameters.description" into "AAS.submodelElement.description".

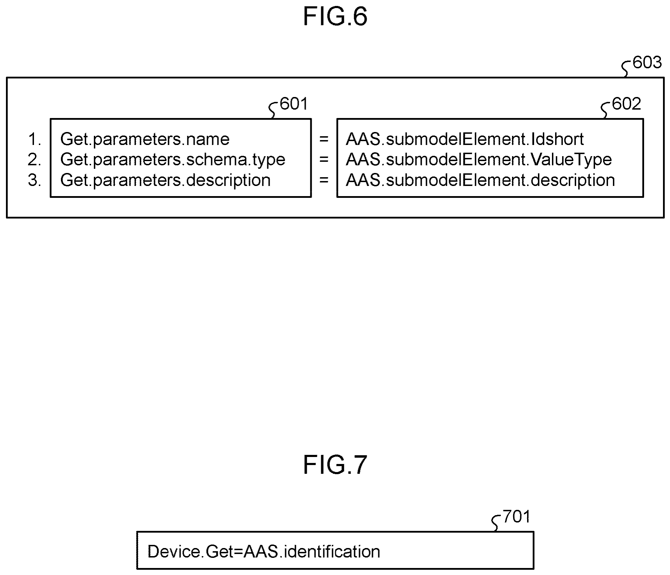

Fig. 6 is a diagram illustrating an example of the transformation rule TRB generated as described above. Fig. 6 illustrates an example in which three transformation rules TRB are generated. A set 603 of rules corresponds to a set including these three transformation rules TRB. An element 601 is an element of the metamodel MMA acquired for the element "id" of the data model 401 (data model DMA) that is a transformation source. An element 602 is an element of the metamodel MMB acquired for the element "identifier" of the data model 402 (data model DMB) that is a transformation destination.

Similarly to the method TM2, there is a possibility that an appropriate transformation rule cannot be generated for terms of which meanings are not highly similar, such as "Get.parameters.name" and "AAS.submodelElement.Idshort". However, in the present arrangement, it is possible to generate the transformation rule TRB by limiting a range of elements for which the transformation rule TRA is obtained, using the compatibility of the data type of an element in the metamodel MMB, a constraint specifying an identifier (unique), and the like. As a result, it is possible to increase the possibility of generating an appropriate transformation rule TRB for a property using a term of which a meaning is not highly similar.

The generation unit 102 may generate the transformation rule TRB by using the LLM 200. The generation unit 102 generates the transformation rule TRB by inputting a prompt giving an instruction for generating the transformation rule TRB to the LLM 200 in consideration of, for example, the semantic similarity of the names of the lower definition elements in the hierarchical structure and the compatibility of the data types.

The output control unit 106 may output the inter-metamodel transformation rule TRB. As described above, not all elements of the metamodel but elements related to the property for which the transformation rule TRA has been generated are considered at the time of generating the transformation rule TRB. As a result, the transformation rule TRB with higher accuracy can be generated.

Next, a generation example of the transformation rule TRC will be described. Fig. 7 is a diagram illustrating an example of the generated transformation rule TRC. Fig. 7 illustrates an example of the transformation rule TRC generated in a case where the transformation rule TRA for transforming "id" into "identifier" is obtained, similarly to the above description.

For example, the generation unit 102 specifies "Device.Get", which is a hierarchical structure of a plurality of classes from a class hierarchy defining "id" to a root class (uppermost hierarchical class), from the data model 401 (data model DMA), with the element "id" (property PA) as a leaf (lowermost element of the hierarchical structure). In addition, the generation unit 102 performs a similar process on the element "identifier" (property PB), and specifies "AAS.identification", which is a hierarchical structure of a plurality of classes up to the root class, from the data model 402 (data model DMB). The generation unit 102 generates the transformation rule TRC for mutually transforming the specified two hierarchical structures. A transformation rule 701 in Fig. 7 is an example of the transformation rule TRC generated as described above.

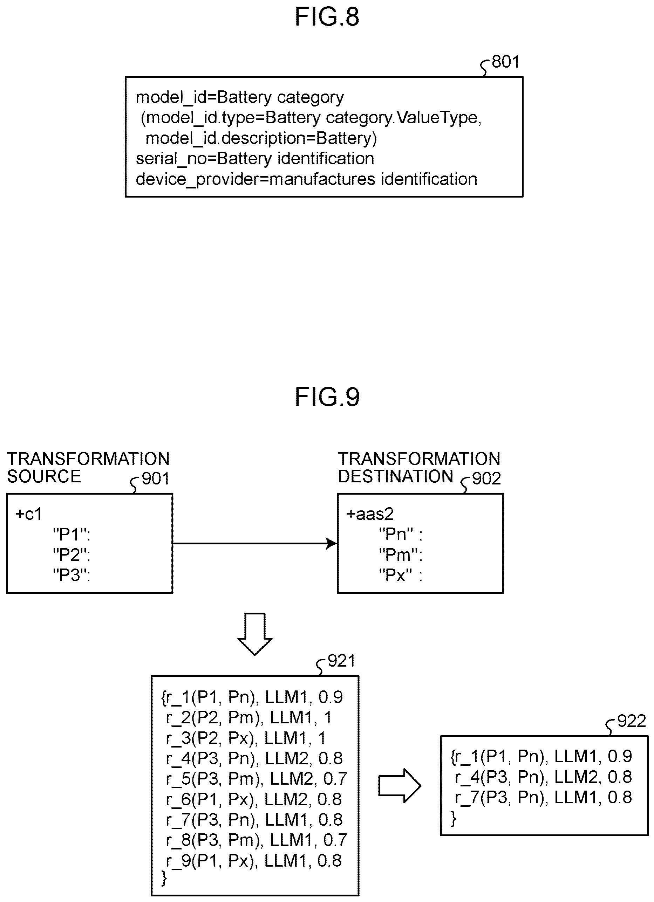

Next, a generation example of the transformation rule TRD will be described. Fig. 8 is a diagram illustrating an example of the generated transformation rule TRD. Fig. 8 illustrates an example of the transformation rule TRD generated in a case where the transformation rule TRA for transforming "id" into "identifier" is obtained, similarly to the above description.

In the present arrangement, for each of the properties PA, the transformation rule TRD is generated with the transformation rule TRB and the transformation rule TRC as constraints. For example, the transformation rule TRB is the set 603 of the rules in Fig. 6. Further, the transformation rule TRC is the transformation rule 701 in Fig. 7. A prompt for giving an instruction for generating the transformation rule TRD is, for example, the following prompt.

"For the input, based on the correspondence relationship between the hierarchical structure of the transformation source and the hierarchical structure of the transformation destination indicated by the transformation rule TRC, apply the transformation rule TRB between the metamodel elements, and generate the transformation rule between the transformation source model and the transformation destination model described by using the metamodel elements included in the transformation rule TRB."

Since the transformation rule TRB between metamodels is a constraint, the range in which the transformation rule TRD is generated is narrowed down to a range including elements included in the transformation rule TRB. Furthermore, since the transformation rule TRC between the hierarchical structures is a constraint, the range in which the transformation rule TRD is generated is narrowed down to a hierarchy the same as or lower than a hierarchical structure included in the transformation rule TRC. As a result, the generation accuracy of the transformation rule can be improved.

For example, for the data model 401 and the data model 402 (Fig. 4), a transformation rule TRD between an element included in a hierarchy the same as or lower than the "Get" class lower than the "Device" class and an element included in a hierarchy the same as or lower than the "identification" class lower than the "AAS" class is generated. That is, for example, elements included in "Device.Data", "AAS.general_characteristics", and "AAS.performance" that are different hierarchical structures can be excluded from generation targets of the transformation rule TRD.

A transformation rule 801 in Fig. 8 is an example of the transformation rule TRD generated in this manner. For example, the transformation rule TRD "model_id=Battery category" in the first row is a rule for transforming a property "model_id" (an example of the property PC) included in the data model DMA into a property "Battery category" (an example of the property PD) included in the data model DMB.

Next, details of a process of determining the transformation rule TRD in the determination unit 104 will be described. Fig. 9 is a diagram for describing an example of a determination process.

Data 901 represents an example of an element (property PA) included in the data model DMA that is a transformation source. Data 902 represents an example of an element (property PB) included in the data model DMB that is a transformation destination. It is assumed that a set 921 of transformation rules is generated as the transformation rule TRD between the data 901 and the data 902. Each element of the set, that is, each transformation rule TRD is expressed in a format of "rule, LLM used, reliability".

The rule is expressed in a format of "rule name(element of transformation source, element of transformation destination)". For example, "r_1(P1, Pn)" indicates that the rule name is "r_1" and the rule is to transform an element "P1" included in the data 901 of the transformation source into an element "Pn" included in the data 902 of the transformation destination. The used LLM represents, for example, information specifying the LLM 200 used to generate the rule among a plurality of LLMs 200 (the LLM 200-1, the LLM 200-2, etc.).

For example, the determination unit 104 determines the transformation rule TRD with high reliability for each element of the data 902 of the transformation destination. The case of the element "Pn" included in the data 902 will be described as an example. The transformation rules TRD for transformation into the element "Pn" are three rules having rule names of "r_1", "r_4", and "r_7". A set 922 of rules is an example of a set including these three rules. The determination unit 104 determines, as a transformation rule TRD to be recommended, a transformation rule TRD having high reliability from the three transformation rules TRD.

As the reliability, a value calculated according to the number of times (number) of generation may be used. For example, the reliability may be a total value of reliability of rules having the same "(element of transformation source, element of transformation destination)". In the example in Fig. 9, rules of which "(element of transformation source, element of transformation destination)" are "(P3, Pn)" are two rules having the rule names of "r_4" and "r_7". Therefore, as the reliability of the transformation rule TRD corresponding to the "(P3, Pn)", 1.6 is used which is a total value of the reliability 0.8 of the rule of the "r_4" and the reliability 0.8 of the rule of the "r_7". Since the number of transformation rules TRD corresponding to "(P1, Pn)" is one, the reliability of 0.9 of the rule of "r_1" is used as the reliability. In this example, since 1.6 is larger than 0.9, the determination unit 104 determines a rule corresponding to "(P3, Pn)" as the transformation rule TRD to be recommended.

The reliability may be an average value of reliability of rules having the same "(element of transformation source, element of transformation destination)". In this case, the reliability of the transformation rule TRD corresponding to "(P3, Pn)" is (0.8+0.8)/2 = 0.8. Since 0.9 is larger than 0.8, the determination unit 104 determines the rule corresponding to "(P1, Pn)" as the transformation rule TRD to be recommended.

Furthermore, the determination unit 104 may generate the transformation rule TRD with which the reliability weighted by using a weight assigned to a model (LLM) used to generate the transformation rule TRD is associated. For example, the determination unit 104 may assign a weight to an LLM that generates a transformation rule, and calculate reliability weighted by using the weight assigned to the corresponding LLM for the generated transformation rule. For example, in a case where a weight of "0.7" is assigned to an LLM 1 and a weight of "1.0" is assigned to an LLM 2 for the set 922, the reliability of the transformation rule TRD corresponding to "(P1, Pn)" is "0.9×0.7=0.63", and the reliability of the transformation rule TRD corresponding to "(P3, Pn)" is (0.8×0.7+0.8×1.0)/2=0.68. The determination unit 104 determines a rule corresponding to "(P3, Pn)" as the transformation rule TRD to be recommended.

In a case where the transformation rule TRD is determined according to a voting method using the generation number thereof, the determination unit 104 may obtain the number of generated transformation rules by using a value weighted by using a weight assigned to a model (LLM) used to generate the transformation rule TRD. For example, the determination unit 104 may assign a weight to an LLM that generates a transformation rule, and calculate a total value of values weighted to 1 (corresponding to a value weighted to the number of times of 1) by using the weight assigned to the corresponding LLM for the generated transformation rule as the generation number thereof.

Instead of determining the transformation rule TRD having the highest reliability, the determination unit 104 may determine a certain number of transformation rules TRD in descending order of the reliability or the transformation rule TRD having reliability equal to or more than a threshold value. In this case, the determination unit 104 may output the determined transformation rule TRD and ranks based on the magnitude of the reliability in association with each other. The determination unit 104 may output a result in which ranks based on the magnitude of the reliability are associated with all the transformation rules TRD.

### First Modification Example

The generation unit 102 may further generate a transformation rule (complementation rule) that complements the transformation rule TRD generated in the above procedure. For example, the generation unit 102 detects a property PE (fifth property) not included in one or more transformation rules TRD generated for each of one or more properties PA among one or more properties included in the data model DMB. The generation unit 102 generates a complementation rule (fifth transformation rule) that transforms the property PF (sixth property) that is one of one or more properties included in the data model DMA into the detected property PE. In a case where the property PF is not detected, the generation unit 102 may generate a complementation rule (sixth transformation rule) for setting a specific value according to the data type of the property PE for the property PE. The specific value may be a value determined with reference to a transformation rule (generated rule) generated in the past, or may be a value (default value) determined in advance according to the data type.

For example, the generation unit 102 stores generated rules in the storage unit 121. The generated rules are at least some of the transformation rule TRA, the transformation rule TRB, and the transformation rule TRD. In a case where the property PF is not detected, the generation unit 102 extracts a generated rule including the property PF from the generated rules. In a case where one or more generated rules are extracted, the generation unit 102 determines one transformation rule by using a method of determining a transformation rule in the determination unit 104, and sets a value included in the determined rule as the specific value. In a case where a generated rule including the property PF is not extracted, the generation unit 102 may use the default value as the specific value.

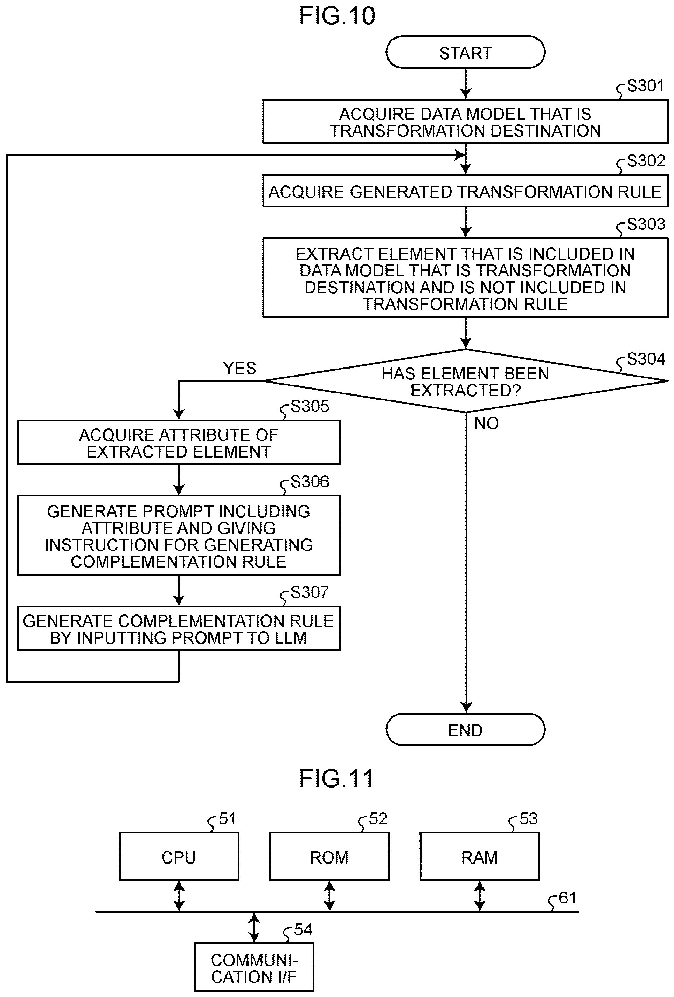

Fig. 10 is a flowchart illustrating an example of a complementation rule generation process.

The generation unit 102 acquires the data model DMB that is a transformation destination (step S301). The generation unit 102 acquires the transformation rule TRD generated so far (step S302). The generation unit 102 extracts an element (property PE) that is included in the data model DMB and is not included in the transformation rule TRD (step S303).

For example, the generation unit 102 extracts a property "rated voltage" belonging to "general_characteristics" and a property "SoC" belonging to the "performance" class as the properties PE, for the data model 402 (corresponding to the data model DMB) in Fig. 4.

The generation unit 102 determines whether or not an element has been extracted (step S304). In a case where no element has been extracted (step S304: No), the generation unit 102 ends the complementation rule generation process.

In a case where an element has been extracted (step S304: Yes), the generation unit 102 acquires an attribute of the extracted element (step S305). Examples of the attribute are a hierarchical structure name to which the element belongs, a name of the element, and a data type of the element, and may be acquired from the metamodel MMB.

The generation unit 102 generates a prompt for generating the complementation rule, the prompt including the acquired attribute (step S306). The generation unit 102 generates, for example, the following prompt. "Please generate a rule for assigning values of {element name} and {data type} defined in {hierarchical structure name}."

The generation unit 102 generates a complementation rule by inputting the generated prompt to the LLM 200 (step S307). Thereafter, the generation unit 102 adds the generated complementation rule as a new transformation rule TRD, and returns to step S302 to repeat the process.

### Second Modification Example

The generation unit 102 may generate a new transformation rule with reference to a transformation rule generated in the past (generated rule). For example, the generation unit 102 stores generated rules in the storage unit 121. The generated rules are at least some of the transformation rule TRA, the transformation rule TRB, and the transformation rule TRD. The generation unit 102 executes a process of generating the transformation rule TRA after the generated rule is stored in the storage unit with reference to the generated rule stored in the storage unit 121. For example, the generation unit 102 generates the transformation rule TRA by inputting a prompt including the generated rule as a sample to the LLM 200. The generation unit 102 may cause the generated rule as a sample to be included in the prompt used to generate the transformation rule TRD.

Since the transformation rule generated in the past can be referred to, transformation rules (the transformation rule TRA and the transformation rule TRD) can be generated with higher accuracy.

As described above, in the information processing apparatus according to the arrangement, the transformation rule between the plurality of formats of data can be generated with higher accuracy. As a result, for example, automation of data interoperability can be promoted.

Next, a hardware configuration of the information processing apparatus according to the arrangement will be described with reference to Fig. 11. Fig. 11 is an explanatory diagram illustrating a hardware configuration example of the information processing apparatus according to the arrangement.

The information processing apparatus according to the arrangement includes a control device such as a central processing unit (CPU) 51, a storage device such as a read only memory (ROM) 52 and a random access memory (RAM) 53, a communication I/F 54 that is connected to a network and performs communication, and a bus 61 that connects the respective units.

A program executed by the information processing apparatus according to the arrangement is provided by being incorporated in the ROM 52 or the like in advance.

The program executed by the information processing apparatus according to the arrangement may be provided as a computer program product by being recorded as a file in an installable format or an executable format in a computer-readable recording medium such as a compact disk read only memory (CD-ROM), a flexible disk (FD), a compact disk recordable (CD-R), or a digital versatile disk (DVD).

Furthermore, the program executed by the information processing apparatus according to the arrangement may be stored on a computer connected to a network such as the Internet and provided by being downloaded via the network. The program executed by the information processing apparatus according to the arrangement may be provided or distributed via a network such as the Internet.

The program executed by the information processing apparatus according to the arrangement can cause a computer to function as each unit of the information processing apparatus described above. In this computer, the CPU 51 can read a program from a computer-readable storage medium onto a main storage device and execute the program.

A configuration example of the arrangement will be described below.

Configuration Example 1. An information processing apparatus (100) comprising a processing unit configured to: generate (S102), by using a first data model and a second data model different from each other, a first transformation rule for transforming, for each of one or more first properties among one or more properties included in the first data model, the first property into a second property among one or more properties included in the second data model on the basis of a semantic similarity between the one or more properties included in the first data model and the one or more properties included in the second data model, and generate (S105) a second transformation rule for transforming, for each of the one or more first properties, a first element into a second element, the first element including a definition of the first property among elements included in a first metamodel that is a metamodel of the first data model, the second element including a definition of the second property among elements included in a second metamodel that is a metamodel of the second data model.

Configuration Example 2. The information processing apparatus (100) according to configuration example 1, wherein the first data model and the second data model each include a plurality of classes with a hierarchical structure and the one or more properties belonging to any of the plurality of classes, and the processing unit configured to generate (S106) a third transformation rule for transforming, for each of the one or more first properties, a hierarchical structure from a class to which the first property belongs to a root class into a hierarchical structure from a class to which the second property belongs to a root class.

Configuration Example 3. The information processing apparatus (100) according to configuration example 2, wherein the processing unit configured to generate (S107) a fourth transformation rule for transforming, for each of the one or more first properties, one or more third properties among the one or more properties included in the first data model into a fourth property among the one or more properties included in the second data model, with the second transformation rule and the third transformation rule as constraints.

Configuration Example 4. The information processing apparatus (100) according to configuration example 3, wherein the processing unit configured to generate (S107) the fourth transformation rule in which reliability is associated with each of the one or more first properties, and determine the fourth transformation rule having the reliability higher than reliability of the other fourth transformation rules among the generated one or more fourth transformation rules.

Configuration Example 5. The information processing apparatus (100) according to configuration example 4, wherein the processing unit configured to use, as the reliability for the first property for which the fourth transformation rule is generated multiple times, an average value of the reliability associated with the fourth transformation rules generated the multiple times.

Configuration Example 6. The information processing apparatus (100) according to configuration example 4, wherein the processing unit configured to generate (S107) the fourth transformation rule with which the reliability weighted by using a weight assigned to a model is applied, the model being used to generate the fourth transformation rule.

Configuration Example 7. The information processing apparatus (100) according to configuration example 3, wherein the processing unit configured to determine, from among the one or more generated fourth transformation rules, the fourth transformation rule of which a generation number is greater than a generation number of the other fourth transformation rules.

Configuration Example 8. The information processing apparatus (100) according to configuration example 7, wherein the processing unit configured to obtain the generation number by using a value weighted by using a weight assigned to a model used to generate the fourth transformation rule.

Configuration Example 9. The information processing apparatus (100) according to configuration example 3, wherein the processing unit configured to detect a fifth property that is not included in the one or more fourth transformation rules respectively generated for the one or more first properties among the one or more properties included in the second data model, and generate (S307) a fifth transformation rule for transforming a sixth property that is one of the one or more properties included in the first data model into the detected fifth property.

Configuration Example 10. The information processing apparatus (100) according to configuration example 9, wherein the processing unit configured to generate a sixth transformation rule for setting a specific value corresponding to a data type of the fifth property for the fifth property in a case where the sixth property is not detected.

Configuration Example 11. The information processing apparatus (100) according to any one of configuration examples 1 to 10, wherein the processing unit configured to store a generated rule including at least one of the generated first transformation rule and the generated second transformation rule in a storage unit, and execute a process of generating the first transformation rule after the generated rule is stored in the storage unit with reference to the generated rule stored in the storage unit.

Configuration Example 12. The information processing apparatus (100) according to any one of configuration examples 1 to 11, wherein the processing unit configured to execute a transformation process of transforming data of the one or more properties included in the first data model into data of the one or more properties included in the second data model by using the generated second transformation rule.

Configuration Example 13. The information processing apparatus (100) according to configuration example 12, wherein in a case where an error occurs in the transformation process, the processing unit configured to generate correction information for correcting the error.

Configuration Example 14. An information processing method executed by an information processing apparatus (100), the method comprising: generating (S102), by using a first data model and a second data model different from each other, a first transformation rule for transforming, for each of one or more first properties among one or more properties included in the first data model, the first property into a second property among one or more properties included in the second data model on the basis of a semantic similarity between the one or more properties included in the first data model and the one or more properties included in the second data model; and generating (S105) a second transformation rule for transforming, for each of the one or more first properties, a first element into a second element, the first element including a definition of the first property among elements included in a first metamodel that is a metamodel of the first data model, the second element including a definition of the second property among elements included in a second metamodel that is a metamodel of the second data model.

Configuration Example 15. A computer program product having a computer readable medium including programmed instructions stored thereon, wherein the instructions, when executed by a computer, cause the computer to execute: generating (S102), by using a first data model and a second data model different from each other, a first transformation rule for transforming, for each of one or more first properties among one or more properties included in the first data model, the first property into a second property among one or more properties included in the second data model on the basis of a semantic similarity between the one or more properties included in the first data model and the one or more properties included in the second data model; and generating (S105) a second transformation rule for transforming, for each of the one or more first properties, a first element into a second element, the first element including a definition of the first property among elements included in a first metamodel that is a metamodel of the first data model, the second element including a definition of the second property among elements included in a second metamodel that is a metamodel of the second data model.

While certain arrangements have been described, these arrangements have been presented by way of example only, and are not intended to limit the scope of the claims. Indeed, the apparatuses described herein may be embodied in a variety of other forms; furthermore, various omissions, substitutions and changes in the form of the apparatuses described herein may be made.

## Claims

1. An information processing apparatus (100) comprising
a processing unit configured to:
generate (S102), by using a first data model and a second data model different from each other, a first transformation rule for transforming, for each of one or more first properties among one or more properties included in the first data model, the first property into a second property among one or more properties included in the second data model on the basis of a semantic similarity between the one or more properties included in the first data model and the one or more properties included in the second data model, and
generate (S105) a second transformation rule for transforming, for each of the one or more first properties, a first element into a second element, the first element including a definition of the first property among elements included in a first metamodel that is a metamodel of the first data model, the second element including a definition of the second property among elements included in a second metamodel that is a metamodel of the second data model.

2. The information processing apparatus (100) according to claim 1, wherein
the first data model and the second data model each include a plurality of classes with a hierarchical structure and the one or more properties belonging to any of the plurality of classes, and
the processing unit configured to
generate (S106) a third transformation rule for transforming, a hierarchical structure from a class to which the first property belongs to its ancestor classes until root class, into a hierarchical structure from a class to which the second property belongs to its ancestor classes until root class.

3. The information processing apparatus (100) according to claim 2, wherein
the processing unit configured to
generate (S107) a fourth transformation rule for transforming, for each of the one or more first properties, one or more third properties among the one or more properties included in the first data model into a fourth property among the one or more properties included in the second data model, with the second transformation rule and the third transformation rule as constraints.

4. The information processing apparatus (100) according to claim 3, wherein
the processing unit configured to
generate (S107) the fourth transformation rule in which reliability is associated with each of the one or more first properties, and
determine the fourth transformation rule having the reliability higher than reliability of the other fourth transformation rules among the generated one or more fourth transformation rules.

5. The information processing apparatus (100) according to claim 4, wherein
the processing unit configured to
use, as the reliability for the first property for which the fourth transformation rule is generated multiple times, an average value of the reliability associated with the fourth transformation rules generated multiple times.

6. The information processing apparatus (100) according to claim 4, wherein
the processing unit configured to
generate (S107) the fourth transformation rule with which the reliability weighted by using a weight assigned to a model is applied, the model being used to generate the fourth transformation rule.

7. The information processing apparatus (100) according to claim 3, wherein
the processing unit configured to
determine, from among the one or more generated fourth transformation rules, the fourth transformation rule of which a generation number is greater than a generation number of the other fourth transformation rules.

8. The information processing apparatus (100) according to claim 7, wherein
the processing unit configured to
obtain the generation number by using a value weighted by using a weight assigned to a model used to generate the fourth transformation rule.

9. The information processing apparatus (100) according to claim 3, wherein
the processing unit configured to
detect a fifth property that is not included in the one or more fourth transformation rules respectively generated for the one or more first properties among the one or more properties included in the second data model, and
generate (S307) a fifth transformation rule for transforming a sixth property that is one of the one or more properties included in the first data model into the detected fifth property.

10. The information processing apparatus (100) according to claim 9, wherein
the processing unit configured to
generate a sixth transformation rule for setting a specific value corresponding to a data type of the fifth property for the fifth property in a case where the sixth property is not detected.

11. The information processing apparatus (100) according to any one of claims 1 to 10, wherein
the processing unit configured to
store a generated rule including at least one of the generated first transformation rule and the generated second transformation rule in a storage unit, and
execute a process of generating the first transformation rule after the generated rule is stored in the storage unit with reference to the generated rule stored in the storage unit.

12. The information processing apparatus (100) according to any one of claims 1 to 11, wherein
the processing unit configured to
execute a transformation process of transforming data of the one or more properties included in the first data model into data of the one or more properties included in the second data model by using the generated second transformation rule.

13. The information processing apparatus (100) according to claim 12, wherein
in a case where an error occurs in the transformation process, the processing unit configured to
generate correction information for correcting the error.

14. An information processing method executed by an information processing apparatus (100), the method comprising:
generating (S102), by using a first data model and a second data model different from each other, a first transformation rule for transforming, for each of one or more first properties among one or more properties included in the first data model, the first property into a second property among one or more properties included in the second data model on the basis of a semantic similarity between the one or more properties included in the first data model and the one or more properties included in the second data model; and
generating (S105) a second transformation rule for transforming, for each of the one or more first properties, a first element into a second element, the first element including a definition of the first property among elements included in a first metamodel that is a metamodel of the first data model, the second element including a definition of the second property among elements included in a second metamodel that is a metamodel of the second data model.

15. A computer program product having a computer readable medium including programmed instructions stored thereon, wherein the instructions, when executed by a computer, cause the computer to execute:
generating (S102), by using a first data model and a second data model different from each other, a first transformation rule for transforming, for each of one or more first properties among one or more properties included in the first data model, the first property into a second property among one or more properties included in the second data model on the basis of a semantic similarity between the one or more properties included in the first data model and the one or more properties included in the second data model; and
generating (S105) a second transformation rule for transforming, for each of the one or more first properties, a first element into a second element, the first element including a definition of the first property among elements included in a first metamodel that is a metamodel of the first data model, the second element including a definition of the second property among elements included in a second metamodel that is a metamodel of the second data model.
